# EUROPEAN PATENT APPLICATION

(11) **EP 4 591 716 A1**
(43) Date of publication of application: **30.07.2025**
(21) Application number: 24153748.9
(22) Date of filing: 24.01.2024
(51) Int. Cl.: A23G 1/10, A23G 1/12

(54) **APPARATUS FOR MIXING AND/OR CONCHING EDIBLE MASS**

(71) Applicant: Royal Duyvis Wiener B.V., 1541 KD Koog aan de Zaan (NL)
(72) Inventor: de Gier, Nick, 1541 KD Koog aan de Zaan (NL)
(74) Representative: De Vries & Metman

(57) **Abstract**

The invention relates to an apparatus (1, 15) for mixing and/or conching edible mass, in particular cocoa containing mass, such as chocolate, cocoa liquor or compound, comprising a tank (3), at least one shaft (4, 4A, 4B) rotatably mounted in the tank (3) and provided with elements (5) for mixing the edible mass and/or subjecting the edible mass to shear stresses, and a permanent magnet motor (10) for rotatably driving the shaft (4, 4A, 4B) thus mixing the edible mass and/or subjecting the edible mass to shear stresses between the shear elements of the shaft (4A) and the wall of the tank (3).

## Description

The present invention relates to an apparatus for mixing and/or conching edible mass, in particular cocoa containing mass, such as chocolate, cocoa liquor or compound, comprising a tank, in the trade also referred to as trough or mixing and/or conching vessel, at least one shaft rotatably mounted in the tank and provided with elements for mixing the edible mass and/or subjecting the edible mass to shear stresses, and a motor for rotatably driving the shaft, thus mixing the edible mass and/or subjecting the edible mass to shear stresses between the shear elements of the shaft and the wall of the tank. The apparatus typically also has an inlet for the edible mass and/or ingredients of an edible mass in the upper part of the apparatus and an outlet in the lower part, in particular in the bottom of the apparatus.

Conching improves the flavor of e.g. chocolate. Consumers prefer a conched chocolate over a non-conched chocolate. Sensory panels often describe conched chocolate as 'more balanced', 'better chocolate flavor'. Conching usually comprises: filling of the conch, a dry conch phase, a plastic or paste phase, and a liquid phase. In an example, during conching and through the phases, temperature is increased and remaining ingredients, such as fat, e.g. cocoa butter, and emulsifier(s), are added to the edible mass, e.g. chocolate. The effect of conching is that moisture and volatiles evaporate and the fat is better homogenized, which improves the edible mass from a sensory perspective.

CH 686 857 A relates to an "arrangement for mixing, rubbing and/or forming a paste, [which] comprises at least one rotor (2-4) which has a trough (1) which accommodates a horizontal axis and which has an opening (8) which is partially covered, and a lamena construction on the shaft opening walls (9'). The lamanae (10) are held on the walls of the shaft using a holding unit which incorporates a slot (11) in the shaft wall which can accommodate the lamena cross section. A scraping unit is located near the slot. The scraping unit pref. consists of a plastic, e.g. tetrafluoroethylene." (Translation provided by Espacenet.)

DE 3 626 732 A1 relates to a "conche for pulverising and inserting chocolate compounds has at least two shafts (6, 7) in a trough (1), to which there are assigned separate drives, especially a motor (M1, M2) in each case. Each motor (M1 and/or M2) is connected to a change-over device (12), so that the direction of rotation of one of the two motors (M1 or M2) can be changed without changing the direction of rotation of the other motor being necessary. This provides the option of having the rotors (4, 5) of the conche run in the same direction or in opposite directions, mixing being improved when they rotate in the same direction." (Translation provided by Espacenet.)

It is an object of the present invention to provide an improved mixer and/or conche for edible mass, such as chocolate or compound.

To this end, the mixer and/or conche according to the present invention is characterized in that the motor is a permanent magnet motor. In an embodiment, the apparatus comprises a second shaft rotatably mounted in the tank and provided with elements for mixing the edible mass and/or subjecting the edible mass to shear stresses and a motor, preferably a permanent magnet motor, for rotatably driving the shaft.

In an embodiment, the apparatus comprises a further shaft rotatably mounted in the tank and provided with elements for mixing the edible mass and a motor, preferably a permanent magnet motor, for rotatably driving the shaft.

In a refinement, one or more, e.g. two, of the shafts for mixing and shearing are arranged horizontally and in parallel.

In a refinement, the apparatus is provided with a smaller mixing shaft between and below two shafts for mixing and/or shearing.

To enable a particularly compact configuration of the apparatus and/or to dispense with the need for a belt drive, in an embodiment, for one or more of the permanent magnet motors the rotational axis of the rotor of the motor and the rotational axis of the shaft driven by that motor are aligned.

The permanent magnet motors were found to significantly increase efficiency in an apparatus that has a high electricity consumption and/or enable a more compact build of the mixer or conche.

In an embodiment, at least one of the permanent magnet motors drives its respective shaft via an epicyclic gear train comprising a sun gear, one or more planet gears and a ring gear. This transmission enables the use of relatively small permanent magnet motors.

In a refinement, the reduction ratio of the epicyclic gear is at least 1:3, preferably in a range from 1:4 to 1:20.

In an embodiment, at least one of the permanent magnet motors directly drives its respective shaft, e.g. the or each shaft is fixedly connected to or an extension of the rotor of its motor.

In an embodiment, the apparatus comprises at least one controller to control, e.g. by sinusoidal signal and/or frequency, the rotational speed of the permanent magnet motor or motors to obtain a rotational speed of the shear shaft or shafts to within a range of 5 to 50 revolutions per minute (rpm), preferably within a range of 8 to 30 rpm.

In an embodiment, at least one, preferably most or all, of the motors is (are) a permanent magnet synchronous motor and/or a liquid-cooled motor and/or has (have) the permanent magnets on the rotor and/or a rated power of at least 50 kiloWatt (kW) and/or a torque of at least 15 kiloNewtonmeter (kNm), preferably at least 20 kNm.

For the sake of completeness, attention is drawn to the following patent publication.

CH 332 458 A relates to a continuously operating liquefaction, mixing and kneading machine for chocolate and cocoa masses, having a heatable shaft provided with mixing and conveying elements, which rotates in a heatable chamber in which mixing elements are attached, which cooperate with those of the shaft, the mass to be treated being conveyed from the inlet opening to the outlet opening of the chamber along the shaft.

The invention will now be explained in more detail with reference to the drawings.
Figures 1 and 2 schematically show a perspective view and a cross-section of a mixer according to the invention.
Figures 3 and 4 schematically show a perspective view and a cross-section of a conche according to the invention.

The Figures are schematic, not necessarily to scale and details that are not required for understanding the present invention may have been omitted. Terms such as "up", "down", "above", "below", relate to the embodiments as oriented in the drawings, unless otherwise specified. Further, elements that are at least substantially identical or that perform an at least substantially identical function are denoted by the same numeral.

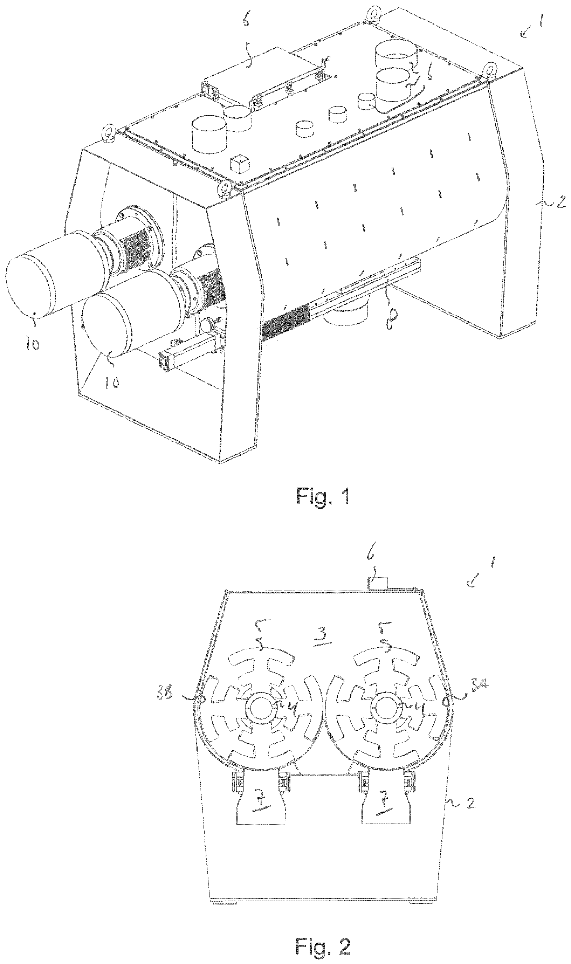

Figures 1 and 2 show a mixer 1 that is suitable for mixing the ingredients of an edible mass, such as chocolate or compound. The mixer comprises a frame 2 and a horizontally extending tank 3. The tank accommodates two or more shafts, in this example two horizontal and parallel shafts 4, rotatably mounted in the frame and tank and provided with mixing elements 5 for mixing the mass in circumferential direction as well as in the horizontal direction, i.e. the mixing elements are inclined to force, during rotation of the shafts, the mass also in the horizontal direction. The wall of the tank follows the circumference of the mixing element over more than 180 degrees, effectively defining two parallel, communicating compartments 3A, 3B within the tank. The top of the tank is provided with inlet openings 6 to feed the ingredients to the tank, whereas the bottom of the tank is provided with outlet openings 7, operated by slides 8 positioned below the shaft and mixing elements. The mixer of this type has a batch capacity in a range from 3.000 to 8.000 kilogram (kg).

Each of the shafts is provided with a permanent magnet synchronous motor 10, e.g. having a rated power of 22 kW, with its rotor direct fixed to and aligned with the shaft and its stator fixed e.g. to the frame, to the stator of the other motor, and/or to a separate torque support.

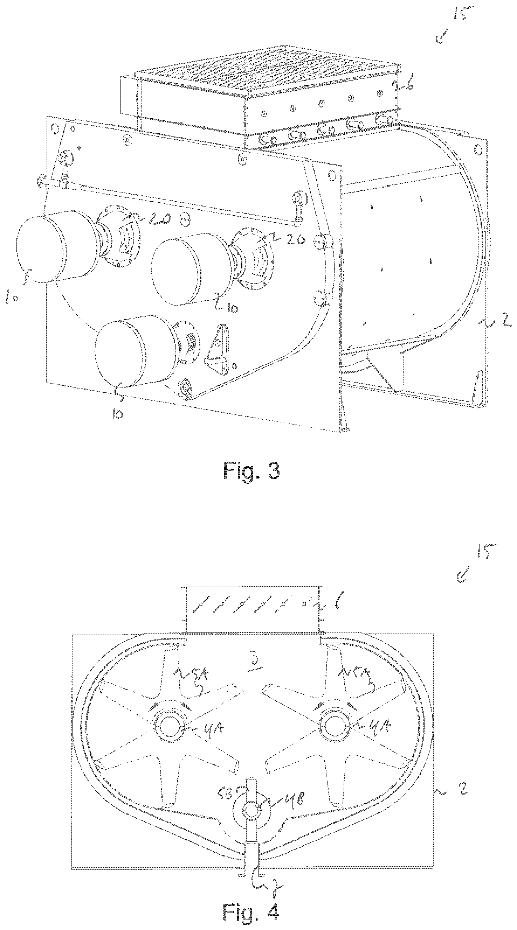

Figures 3 and 4 show a conche 15 that is suitable for mixing and conching an edible mass, such as chocolate or compound. The conche comprises a frame 2 and a horizontally extending tank 3. The tank accommodates three or more shafts, in this example two shearing and mixing shafts 4A and one smaller mixing shaft 4B, all extending horizontally and parallel to each other and all are rotatably mounted in the frame and tank. The shearing and mixing shafts 4A are provided with shearing/mixing elements 5A for shearing the mass in circumferential direction, in particular between the tips/ends of the shearing/mixing elements 5 and the wall of the tank. To this end, wall follows the circumference of the mixing elements 5A over more than 180 degrees, defining a small shearing clearance between the wall and the mixing elements 5A.

The mixing elements 5B on the mixing shaft 4B mix the mass in circumferential direction as well as in the horizontal direction, i.e. the mixing elements are inclined to force, during rotation of the shafts, the mass also in the horizontal direction, thus generating effective circulation of the mass through the tank. The top of the tank is provided with a louvred opening 6 to feed the ingredients to the tank and allow volatiles and moist to escape, whereas the bottom of the tank is provided with an outlet opening 7, positioned below the mixing shaft and mixing elements. The conche of this type has a batch capacity in a range from 3.000 to 9.000 kilogram (kg), e.g. 6.000 kg.

Each of the shearing shafts 4A is provided with an permanent magnet synchronous motor 10, in this example a Oswald TF36.50-24WI having a rated power of 75 kW, with its rotor aligned with the rotational axis of the shaft. The motor is equipped with a planetary gear train 20 having a reduction of e.g. 1:6. The mixing shaft 5A is provided with an equal or smaller synchronous permanent magnet motor 10, with its rotor direct fixed (1:1) to and aligned with the shaft 5A. The stators of the motors are fixed e.g. to the frame, to the stators of the other motors, and/or to a separate torque support.

During operation, in an example, the conche is filled with chocolate from a refiner, followed by dry conching of the chocolate: the mixing and shearing shafts 4A rotate in opposite direction, upwards in the middle, to 'scoop' the mass, ensuring good contact with air. This allows volatiles and moisture to evaporate from the chocolate. Next, in the plastic- and liquid phases the rotational direction of the shafts is reversed and the chocolate is 'smeared' against the wall of the tank, subjecting the chocolate to intensive shear, to homogenize the fat through the chocolate.

The invention is not limited to the embodiment as described above, which can be varied in several ways within the scope of the claims.

## Claims

1. Apparatus (1, 15) for mixing and/or conching edible mass, in particular cocoa containing mass, such as chocolate, cocoa liquor or compound, comprising a tank (3), at least one shaft (4, 4A, 4B) rotatably mounted in the tank (3) and provided with elements (5) for mixing the edible mass and/or subjecting the edible mass to shear stresses, and a motor for rotatably driving the shaft (4, 4A, 4B) thus mixing the edible mass and/or subjecting the edible mass to shear stresses, preferably at least between the shear elements of the shaft (4A) and the wall of the tank (3), **characterized in that** the motor is a permanent magnet motor (10) .

2. Apparatus (1, 15) according to claim 1, comprising a second shaft (4, 4A) rotatably mounted in the tank and provided with elements (5, 5A) for mixing the edible mass and/or subjecting the edible mass to shear stresses and a motor, preferably a permanent magnet motor (10), for rotatably driving the shaft (4, 4A).

3. Apparatus (1, 15) according to claim 1 or 2, comprising a further shaft (4B) rotatably mounted in the tank and provided with elements (5B) for mixing the edible mass and a motor, preferably a permanent magnet motor (10), for rotatably driving the shaft (4B).

4. Apparatus (1, 15) according to claim 3, wherein one or more shafts (4A) for mixing and shearing are arranged horizontally and in parallel.

5. Apparatus (1, 15) according to 4, having a smaller mixing shaft (4B) between and below two shafts (4A) for mixing and/or shearing.

6. Apparatus (1, 15) according to any one of the preceding claims, wherein for one or more of the permanent magnet motors (10) the rotational axis of the rotor of the motor (10) and the rotational axis of the shaft (4, 4A, 4B) driven by that motor (10) are aligned.

7. Apparatus (1, 15) according to any one of the preceding claims, wherein at least one of the permanent magnet motors (1) drives its respective shaft (4A) via an epicyclic gear train (20) comprising a sun gear, one or more planet gears and a ring gear.

8. Apparatus (1, 15) according to claim 7, wherein the reduction ratio of the epicyclic gear (20) is at least 1:3, preferably in a range from 1:4 to 1:20.

9. Apparatus (1, 15) according to any one of the preceding claims, wherein at least one of the permanent magnet motors (10) directly drives its respective shaft (4, 4B) .

10. Apparatus (1, 15) according to any one of the preceding claims, comprising at least one controller to control the rotational speed of the permanent magnet motor or motors (10) to obtain a rotational speed of the shear shaft or shafts (4A) to within a range of 5 to 50 revolutions per minute (rpm), preferably within 8 to 30 rpm.

11. Apparatus (1, 15) according to any one of the preceding claims, wherein at least one of the motors (10) is a synchronous motor and/or a liquid-cooled motor.

12. Apparatus (1, 15) according to any one of the preceding claims, wherein at least one of the motors (10) and/or has its permanent magnets on the rotor and/or has a rated power of at least 50 kiloWatt (kW) and/or a torque of at least 15 kiloNewtonmeter (kNm), preferably at least 20 kNm.
